# EUROPÄISCHE PATENTSCHRIFT

(11) **EP 1 500 561 B1**
(45) Veröffentlichungstag und Bekanntmachung des Hinweises auf die Patenterteilung: **13.09.2006**
(21) Anmeldenummer: 04016867.6
(22) Anmeldetag: 16.07.2004
(51) Int. Cl.: B60R 21/20, B60R 16/02

(54) **Fahrzeuglenkvorrichtung mit feststehendem Mittelteil**
Steering apparatus with stationary center part
Dispositif de direction avec la partie centrale stationnaire

(30) Priorität: 22.07.2003 DE 20311255 U; 12.05.2004 DE 20407617 U
(43) Veröffentlichungstag der Anmeldung: 26.01.2005
(60) Teilanmeldung: 06001529.4
(73) Patentinhaber: TRW Automotive Safety Systems GmbH, 63743 Aschaffenburg (DE)
(72) Erfinder: Kreuzer, Martin, 63839 Kleinwallstadt (DE); Frisch, Ralph, 63776 Mömbris (DE); Neumann, René, 61273 Wehrheim (DE); Fäth, Stefan, 63743 Aschaffenburg (DE); Lefringhausen, Heinz-Jörg, 63533 Mainhausen (DE)
(74) Vertreter: Strass, Jürgen

(56) Entgegenhaltungen:
- EP-A- 0 243 047
- DE-A- 2 131 902
- DE-A- 3 406 327
- DE-A- 4 446 901
- US-A- 6 129 374

## Beschreibung

Die Erfindung betrifft eine Fahrzeuglenkvorrichtung gemäß dem Oberbegriff des Anspruchs 1.

Solche Lenkvorrichtungen, die beispielsweise aus der Deutschen Offenlegungsschrift Nr. 2 131 902 oder der EP 0 414 245 A1 bekannt sind, haben grundsätzlich den Vorteil, daß auf dem Mittelteil angebrachte Bedienelemente unabhängig von der Lenkradstellung immer an der gleichen Stelle zu finden sind. Bei Lenkvorrichtungen mit einem im feststehenden Mittelteil untergebrachten Gassackmodul muß der Gassack nicht mehr notwendigerweise symmetrisch zum Drehzentrum der Lenkvorrichtung gestaltet sein. Da die Orientierung des sich aus dem feststehenden Mittelteil entfaltenden Gassacks von vorneherein feststeht, können asymmetrische Gassackformen mit besseren Rückhalteeigenschaften eingesetzt werden. Die Verkabelung eines relativ zum drehbaren Lenkradteil feststehenden Gassackmoduls ist jedoch problematisch im Vergleich zu herkömmlichen Lenkrädern ohne feststehenden Mittelteil, bei denen üblicherweise eine sogenannte Wickelfeder die ordnungsgemäße elektrische Verbindung zwischen dem starren Kabelbaum am Lenkstock und den mit dem Lenkrad drehbaren elektrischen Komponenten sicherstellt. Bei einer Lenkvorrichtung mit feststehendem Gassackmodul müssen dagegen insbesondere die Zuleitungen zum Gasgenerator durch den drehbaren Lenkradteil geführt werden.

Aufgabe der Erfindung ist es, eine Lenkvorrichtung mit feststehendem Mittelteil zu schaffen, das die Vorteile eines ortsfesten Gassacks bietet, bei dem aber eine einfache und sichere Verkabelung des Gassackmoduls ermöglicht ist.

Gemäß der Erfindung wird dies bei einer Lenkvorrichtung nach dem Oberbegriff des Anspruchs 1 dadurch erreicht, daß im eingebauten Zustand des Gassackmoduls die Gasgeneratoreinheit Bestandteil des Lenkradteils ist, und daß das Gassackmodul ohne die Gasgeneratoreinheit Bestandteil des feststehenden Mittelteils ist. Im Gegensatz zu bisher bekannten Lenkvorrichtungen mit feststehendem Gassackmodul bleibt der Gasgenerator also nicht zusammen mit dem restlichen Gassackmodul ortsfest, sondern dreht sich mit dem Lenkradteil mit. Dies ermöglicht es, eine Verkabelung des Gasgenerators wie bei herkömmlichen Lenkrädern ohne feststehenden Mittelteil mit einer einzigen konventionellen Wickelfeder vorzusehen, wobei ein Verdrillen der Zuleitungen ausgeschlossen ist. Es ist somit trotz feststehendem Mittelteil kein zusätzlicher Aufwand für die Verkabelung erforderlich.

Vorteilhafte und zweckmäßige Ausgestaltungen der erfindungsgemäßen Lenkvorrichtung, insbesondere im Hinblick auf eine Entkopplung der Gasgeneratoreinheit vom Gassackmodul und eine Ankopplung an den Lenkradteil, sind in den Unteransprüchen angegeben.

Weitere Merkmale und Vorteile der Erfindung ergeben sich aus der nachfolgenden Beschreibung des Ausführungsbeispiels und aus den beigefügten Zeichnungen, auf die Bezug genommen wird. In den Zeichnungen zeigen:
Figur 1 eine Draufsicht einer erfindungsgemäßen Lenkvorrichtung;
Figur 2 eine Schnittansicht entlang der Linie A-A aus Fig. 1;
Figur 3 eine Schnittansicht entlang der Linie B-B aus Fig. 1; und
Figuren 4a und 4b vergrößerte Detailansichten der erfindungsgemäßen ersten Lenkvorrichtung vor bzw. nach der Montage des Gassackmoduls; und

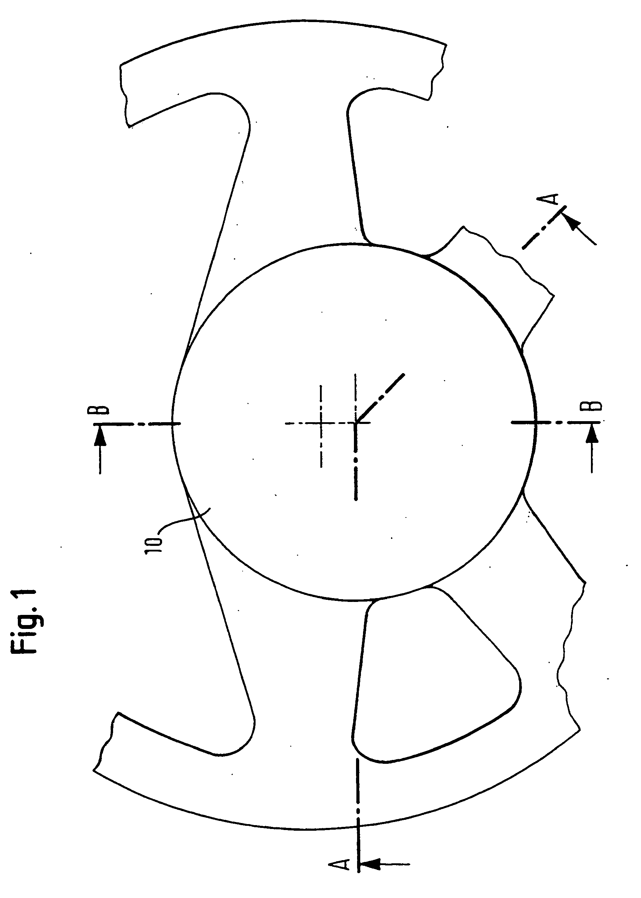

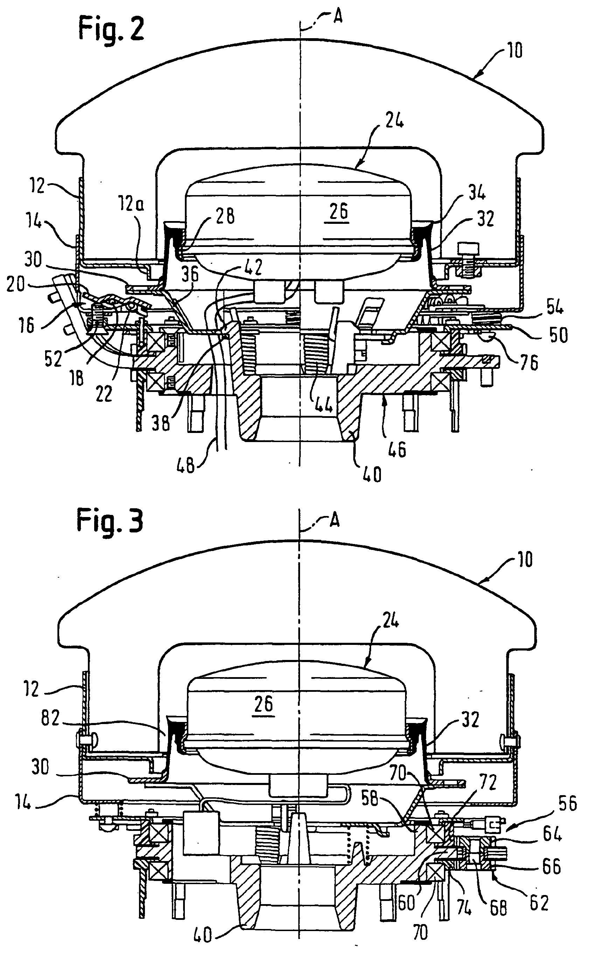

In den Figuren 1 bis 3 ist eine erfindungsgemäße Lenkvorrichtung mit montiertem Gassackmodul 10 dargestellt. Das Gassackmodul 10 umfaßt einen Zusammenbau mit einer Abdeckung und einem Gassackkäfig (in den Figuren 2 und 3 nicht getrennt dargestellt) sowie einem Trägerblech 12 zur Befestigung eines Gassacks (nicht gezeigt) mit einem abgewinkelten Fortsatz 12a und einem Außenträgerblech 14. An das Außenträgerblech 14 sind mehrere Verriegelungseinrichtungen 16 mit einem um eine Achse 18 verschwenkbaren Verriegelungsteil 20 gekoppelt, dessen Funktion später erläutert wird. Das Verriegelungsteil 20 ist durch eine Feder 22 gemäß der Darstellung der Figur 2 bezüglich der Achse 18 gegen den Uhrzeigersinn vorgespannt.

Ferner ist eine Gasgeneratoreinheit 24 mit einem Gasgenerator 26, einem Montageblech 28 und einem ringförmigen Montageflansch 30 sowie einem elastischen Montagezylinder 32 mit außenseitigen Fortsätzen 34 vorgesehen. Die freien Ränder des elastischen Montagezylinders 32 sind einerseits mit dem Montageblech 28 und andererseits mit dem Montageflansch 30 verbunden, so daß der Gasgenerator 26 die Funktion eines Schwingungstilgers übernimmt. Zur Gasgeneratoreinheit 24 gehört auch ein am Montageflansch 30 befestigtes Verbindungsblech 36, an dessen Unterseite radial verschiebbare Federelemente 38 vorgesehen sind.

Die Lenkvorrichtung umfaßt schließlich eine drehfest mit einer Lenksäule des Fahrzeugs (nicht gezeigt) verbundene Nabe 40 mit angeformten Druckgußhaken 42 und im Inneren der Nabe 40 axial angeordnete Federn 44. Einstückig mit der Nabe 40 ist ein Lenkradskelett 46 ausgebildet. Eine in den Gasgenerator 26 geführte (in Figur 2 nur schematisch angedeutete) Zuleitung 48, über die der Gasgenerator 26 mit einer außerhalb der Lenkvorrichtung angeordneten Steuereinheit verbunden ist, ist neben der Nabe 40 aus der Lenkvorrichtung heraus- und einer Wickelfeder (nicht gezeigt) zugeführt. Eine Platte 50, in deren Außenbereich Bolzen 52 vorgesehen sind, ist gegenüber der Nabe 40 drehbar gelagert. Zwischen der Platte 50 und dem Außenträgerblech 14 sind Federn 54 vorgesehen.

Die Gesamtheit der drehfest mit der Lenksäule gekoppelten Bauteile wird im folgenden als Lenkradteil bezeichnet.

In Figur 3 ist eine Getriebeeinheit 56 zu sehen, deren Funktion ebenfalls später erläutert wird. In einem mit der Nabe 40 verbundenen, sich radial von einem axialen Abschnitt 58 weg erstreckenden Skelettabschnitt 60 ist ein Doppelritzelteil 62 gelagert, das zwei parallel angeordnete Ritzel 64, 66 aufweist, die über einen Achsenabschnitt 68 drehfest miteinander verbunden sind. An der Außenseite des axialen Skelettabschnitts 58 sind zwei Wälzlager 70 angebracht, von denen eines oberhalb und eines unterhalb des horizontalen Skelettabschnitts 60 angeordnet ist. Die Wälzlager 70 tragen zwei komplett um die Mittelachse A der Lenkvorrichtung umlaufende Zahnkränze 72, 74, die mit dem oberen Ritzel 64 bzw. mit dem unteren Ritzel 66 in Eingriff stehen. Der untere Zahnkranz 74 ist lenkstockfest gelagert, wogegen der obere Zahnkranz 72 an das Gassackmodul 10 gekoppelt ist.

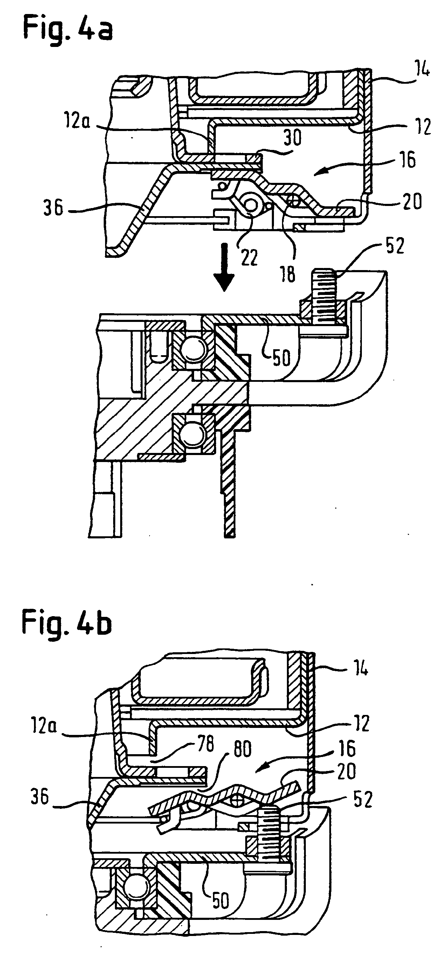

Im folgenden wird der Einbau des Gassackmoduls 10 beschrieben. Vor dem Einbau ist die Gasgeneratoreinheit 24 Bestandteil des Gassackmoduls 10. Wie in Figur 4a gezeigt, drückt das vorgespannte Verriegelungsteil 20 das Verbindungsblech 36 mit dem daran befestigten Montageflansch 30 fest gegen den Fortsatz 12a des Trägerblechs 12, so daß die Gasgeneratoreinheit 24 am Trägerblech 12 gehalten wird. Beim Einsetzen des Gassackmoduls 10 in Pfeilrichtung wird das Gassackmodul 10 auf herkömmliche Weise über Clipverbindungen 76 mit der Platte 50 verrastet. Während dieses Vorgangs wird die Gasgeneratoreinheit 24 automatisch vom Gassackmodul 10 an den Lenkradteil übergeben, wie nachfolgend erläutert wird.

Das Gassackmodul 10 wird beim Einsetzen gegen die Kraft der Federn 54 soweit überdrückt, bis durch den Druck des Fortsatzes 12a auf den Montageflansch 30 und das Verbindungsblech 36 die Federelemente 38 unter die nabenseitigen Haken 42 einrasten. Nach Aufhebung des Drucks auf das Gassackmodul 10 drücken die Federn 44 die Federelemente 38 sicher gegen die Haken 42. Gleichzeitig drücken die Federn 54 das eingerastete Gassackmodul 10 nach oben, so daß ein Spalt 78 zwischen dem Montageflansch 30 und dem Fortsatz 12a entsteht. Außerdem wird beim Einsetzen des Gassackmoduls 10 das Verriegelungsteil 20 durch den als Betätigungsteil dienenden Bolzen 52 gegen seine Vorspannung (gemäß der Darstellung der Figur 4a gegen den Uhrzeigersinn) verschwenkt, so daß auch zwischen dem Verriegelungsteil 20 und dem Verbindungsblech 36 ein Spalt 80 entsteht. Somit ist die Gasgeneratoreinheit 24 vom Gassackmodul 10 entkoppelt und mittels der Federelemente 38 drehfest an die Nabe 42 gekoppelt, d.h. die Gasgeneratoreinheit 24 ist nunmehr Bestandteil des Lenkradteils. Die Zuleitung 48 wird bei einer Drehung des Lenkradteils zusammen mit dem Gasgenerator 26 mitgedreht und kann sich daher nicht verdrillen.

Damit das Gassackmodul 10 ortsfest gegenüber der jetzt mit dem Lenkradteil drehbaren Gasgeneratoreinheit 26 bleiben kann, ist zwischen dem elastischen Montagezylinder 32 und dem Gassackkäfig ein Spalt 82 vorgesehen. Der elastische Montagezylinder 32 mit seinen außenseitigen Fortsätzen 34 verhindert, daß durch diesen Spalt 82 bei einer Aktivierung des Gasgenerators 24 die ausströmenden Gase unkontrolliert nach unten abströmen, da die Fortsätze 34 durch die ausströmenden Gase fest an den Gassackkäfig gedrückt werden und so für eine ausreichende Abdichtung sorgen.

Die Relativbewegung des Lenkradteils gegenüber dem feststehenden Gassackmodul 10 wird durch die Getriebeeinheit 56 ermöglicht. Das an dem radialen Skelettabschnitt 60 gelagerte Doppelritzelteil 62 wird bei einer Drehbewegung des Lenkradteils mitgenommen. Da der untere Zahnkranz 74 lenkstockfest gelagert ist, läuft das untere Ritzel 66 dabei auf dem unteren Zahnkranz 74 ab. Die Drehung des unteren Ritzels 66 wird auf das über den Achsenabschnitt 68 drehfest verbundene obere Ritzel 64 übertragen. Dadurch wird der obere Zahnkranz 72 mit dem daran gekoppelten Gassackmodul 10 entgegengesetzt zur Drehrichtung des Lenkradteils gedreht, so daß sich das Gassackmodul 10 effektiv nicht mit dem Lenkradteil mitdreht, also ortsfest bleibt. Das Gassackmodul 10 ohne die Gasgeneratoreinheit 24 bildet im eingebauten Zustand somit einen gegenüber dem Lenkradteil feststehenden Mittelteil der Lenkvorrichtung.

## Patentansprüche

1. Fahrzeuglenkvorrichtung mit einem drehfest an eine Lenksäule gekoppelten Lenkradteil, einem gegenüber einer Drehung des Lenkradteils feststehenden Mittelteil und einem Gassackmodul (10) mit einer Gasgeneratoreinheit (24), **dadurch gekennzeichnet, daß** im eingebauten Zustand des Gassackmoduls (10) die Gasgeneratoreinheit (24) Bestandteil des Lenkradteils ist und daß das Gassackmodul (10) ohne die Gasgeneratoreinheit (24) Bestandteil des feststehenden Mittelteils ist.

2. Lenkvorrichtung nach Anspruch 1, **dadurch gekennzeichnet, daß** das Gassackmodul (10) und die Gasgeneratoreinheit (24) eine vormontierte Baugruppe bilden und daß ein Mechanismus vorgesehen ist, mittels dem die Gasgeneratoreinheit (24) vom Gassackmodul (10) entkoppelt und an das Lenkradteil angekoppelt werden kann.

3. Lenkvorrichtung nach Anspruch 2, **dadurch gekennzeichnet, daß** der Mechanismus so ausgelegt ist, daß die Entkopplung der Gasgeneratoreinheit (24) vom Gassackmodul (10) und die Ankopplung an das Lenkradteil automatisch bei einem Einsetzen des Gassackmoduls (10) in die Lenkvorrichtung erfolgt.

4. Lenkvorrichtung nach Anspruch 2 oder 3, **dadurch gekennzeichnet, daß** der Mechanismus eine Verriegelungseinrichtung (16) mit einem Verriegelungsteil (20) umfaßt, das zwischen einer Verriegelungsstellung, in der die Gasgeneratoreinheit (24) am Gassackmodul (10) gehalten wird, und einer Freigabestellung bewegbar ist, in der die Gasgeneratoreinheit (24) vom Gassackmodul (10) freigegeben ist.

5. Lenkvorrichtung nach Anspruch 4, **dadurch gekennzeichnet, daß** das Verriegelungsteil (20) an einem Außenträgerblech (14) des Gassackmoduls (10) angebracht ist und in der Verriegelungsstellung einen Montageflansch (30) der Gasgeneratoreinheit (24) gegen einen Fortsatz (12a) eines Trägerblechs (12) des Gassackmoduls (10) drückt.

6. Lenkvorrichtung nach Anspruch 4 oder 5, **dadurch gekennzeichnet, daß** das Verriegelungsteil (20) in die Verriegelungsstellung vorgespannt ist.

7. Lenkvorrichtung nach einem der Ansprüche 4 bis 6, **dadurch gekennzeichnet, daß** ein Betätigungsteil (52) vorgesehen ist, das beim Einsetzen des Gassackmoduls (10) das Verriegelungsteil (20) aus der Verriegelungsstellung in die Freigabestellung bewegt.

8. Lenkvorrichtung nach einem der Ansprüche 2 bis 7, **dadurch gekennzeichnet, daß** der Mechanismus wenigstens ein an die Gasgeneratoreinheit (24) gekoppeltes bewegliches Federelement (38) umfaßt, das zur Kopplung der Gasgeneratoreinheit (24) an das Lenkradteil nach dem Einsetzen des Gassackmoduls (10) fest gegen einen Haken (42) des Lenkradteils gedrückt wird.

9. Lenkvorrichtung nach Anspruch 8, **dadurch gekennzeichnet, daß** der Haken (42) an der Außenseite einer Lenkradnabe (40) gebildet ist und daß das Federelement (38) radial verschiebbar an einem mit einem Montageflansch (30) der Gasgeneratoreinheit (24) befestigten Verbindungsblech (36) angebracht ist.

## Claims

1. A vehicle steering device comprising a steering wheel part coupled to a steering column for joint rotation therewith, a central part which is stationary with regard to a rotation of the steering wheel part, and a gas bag module (10) including a gas generator unit (24), **characterized in that** in the installed state of the gas bag module (10) the gas generator unit (24) is a component of the steering wheel part and that the gas bag module (10) without the gas generator unit (24) is a component of the stationary central part.

2. The steering device according to Claim 1, **characterized in that** the gas bag module (10) and the gas generator unit (24) form a preassembled unit and that a mechanism is provided by means of which the gas generator unit (24) can be uncoupled from the gas bag module (10) and coupled to the steering wheel part.

3. The steering device according to Claim 2, **characterized in that** the mechanism is designed such that the uncoupling of the gas generator unit (24) from the gas bag module (10) and the coupling to the steering wheel part takes place automatically with an insertion of the gas bag module (10) into the steering device.

4. The steering device according to Claim 2 or 3, **characterized in that** the mechanism comprises a locking arrangement (16) with a locking member (20) which is movable between a locking position, in which the gas generator unit (24) is held against the gas bag module (10), and a release position, in which the gas generator unit (24) is released from the gas bag module (10).

5. The steering device according to Claim 4, **characterized in that** the locking member (20) is fitted to an outer carrier plate (14) of the gas bag module (10) and in the locking position presses a mounting flange (30) of the gas generator unit (24) against an extension (12a) of a carrier plate (12) of the gas bag module (10).

6. The steering device according to Claim 4 or 5, **characterized in that** the locking member (20) is biased into the locking position.

7. The steering device according to any of Claims 4 to 6, **characterized in that** an actuating member (52) is provided, which during insertion of the gas bag module (10) moves the locking member (20) from the locking position into the release position.

8. The steering device according to any of Claims 2 to 7, **characterized in that** the mechanism comprises at least one movable spring element (38) which is coupled to the gas generator unit (24) and is pressed firmly against a hook (42) of the steering wheel part for coupling the gas generator unit (24) to the steering wheel part after the insertion of the gas bag module (10).

9. The steering device according to Claim 8, **characterized in that** the hook (42) is formed on the outside of a steering wheel hub (40) and that the spring element (38) is fitted so as to be radially displaceable to a connecting plate (36) fastened to a mounting flange (30) of the gas generator unit (24).

## Revendications

1. Dispositif de direction de véhicule, comportant une partie de volant de direction accouplée de manière solidaire en rotation avec une colonne de direction, une partie médiane immobile par rapport à une rotation de la partie de volant de direction et un module de coussin à gaz (10) avec une unité de générateur de gaz (24), **caractérisé en ce qu'**à l'état de montage du module de coussin à gaz (10), l'unité de générateur de gaz (24) fait partie de la partie de volant de direction, et **en ce que** le module de coussin à gaz (10) sans l'unité de générateur de gaz (24) fait partie de la partie médiane immobile.

2. Dispositif de direction selon la revendication 1, **caractérisé en ce que** le module de coussin à gaz (10) et l'unité de générateur de gaz (24) forment un ensemble préassemblé, et **en ce qu'**il est prévu un mécanisme au moyen duquel l'unité de générateur de gaz (24) est découplée du module de coussin à gaz (10) et peut être accouplée à la partie de volant de direction.

3. Dispositif de direction selon la revendication 2, **caractérisé en ce que** le mécanisme est conçu de telle sorte que le découplage de l'unité de générateur de gaz (24) et l'accouplement à la partie de volant de direction a lieu automatiquement lors d'une mise en place du module de coussin à gaz (10) dans le dispositif de direction.

4. Dispositif de direction selon la revendication 2 ou 3, **caractérisé en ce que** le mécanisme comprend un dispositif de verrouillage (16) avec une partie de verrouillage (20) qui peut être déplacée entre une position de verrouillage, dans laquelle l'unité de générateur de gaz (24) est maintenue sur le module de coussin à gaz (10), et une position de libération, dans laquelle l'unité de générateur de gaz (24) est libérée par le module de coussin à gaz (10).

5. Dispositif de direction selon la revendication 4, **caractérisé en ce que** la partie de verrouillage (20) est montée sur une tôle support extérieure (14) du module de coussin à gaz (10) et dans la position de verrouillage, elle presse une bride de montage (30) de l'unité de générateur de gaz (24) contre un prolongement (12a) d'une tôle support (12) du module de coussin à gaz (10).

6. Dispositif de direction selon la revendication 4 ou 5, **caractérisé en ce que** la partie de verrouillage (20) est précontrainte jusque dans la position de verrouillage.

7. Dispositif de direction selon l'une des revendications 4 à 6, **caractérisé en ce qu'**il est prévu une partie d'actionnement (52) qui lors de la mise en place du module de coussin à gaz (10), déplace la partie de verrouillage (20) depuis la position de verrouillage jusque dans la partie de libération.

8. Dispositif de direction selon l'une des revendications 2 à 7, **caractérisé en ce que** le mécanisme comprend au moins un élément à effet de ressort (38) mobile accouplé à l'unité de générateur de gaz (24), lequel est pressé fermement contre un crochet (42) de la partie de volant de direction pour accoupler l'unité de générateur de gaz (24) à la partie de volant de direction après la mise en place du module de coussin à gaz (10).

9. Dispositif de direction selon la revendication 8, **caractérisé en ce que** le crochet (42) est formé sur la face extérieure d'un moyeu de volant de direction (40), et **en ce que** l'élément à effet de ressort (38) est monté à déplacement radial sur une tôle de liaison fixée à une bride de montage (30) de l'unité de générateur de gaz (24).
